# EUROPÄISCHE PATENTSCHRIFT

(11) **EP 1 254 042 B1**
(45) Veröffentlichungstag und Bekanntmachung des Hinweises auf die Patenterteilung: **26.10.2005**
(21) Anmeldenummer: 01909551.2
(22) Anmeldetag: 31.01.2001
(51) Int. Cl.: B60R 25/00, E05B 49/00

(54) **VERFAHREN ZUM BETREIBEN EINES DIEBSTAHLSCHUTZSYSTEMS FÜR EIN KRAFTFAHRZEUG UND DIEBSTAHLSCHUTZSYSTEM**
METHOD FOR OPERATING AN ANTI-THEFT DEVICE FOR A MOTOR VEHICLE, AND ANTI-THEFT SYSTEM
PROCEDE PERMETTANT DE FAIRE FONCTIONNER UN SYSTEME ANTIVOL POUR VEHICULE ET SYSTEME ANTIVOL ASSOCIE

(30) Priorität: 08.02.2000 DE 10005444
(43) Veröffentlichungstag der Anmeldung: 06.11.2002
(73) Patentinhaber: SIEMENS AKTIENGESELLSCHAFT, 80333 München (DE)
(72) Erfinder: PAPP, Aurel, 93342 Saal (DE)
(86) Internationale Anmeldenummer: PCT/DE2001/000377
(87) Internationale Veröffentlichungsnummer: WO 2001/058729

(56) Entgegenhaltungen:
- EP-A- 0 521 547
- US-A- 5 847 662

## Beschreibung

Die Erfindung betrifft ein Verfahren zum Betreiben eines Diebstahlschutzsystems für ein Kraftfahrzeug, mit dem der Zugang zu einem Kraftfahrzeug nur bei Nachweis einer Berechtigung durch einen Codegeber freigegeben wird.

Bei einem bekannten Diebstahlschutzsystem (DE 43 29 697 C2) führt der Fahrzeughalter zum Entriegeln seines Fahrzeuges statt einem mechanischen Schlüssel einen sog. Codegeber (z.B. in Form einer Scheckkarte) mit sich. Sobald ein Betätigungsmittel am Kraftfahrzeug, wie beispielsweise ein Türgriff betätigt wird, veranlasst die fahrzeugseitige Steuereinheit das Aussenden eines Anforderungssignals. Wird das Anforderungssignal von dem Codegeber empfangen, so sendet dieser automatisch sein ihm charakteristisches Antwortcodesignal zurück, um hiermit seine Berechtigung nachzuweisen. Wird das Antwortcodesignal als berechtigt erkannt, so werden die Türen des Kraftfahrzeugs entriegelt.

Ein sogenannter Frage-Antwort-Dialog findet analog statt, wenn der Benutzer sich im Fahrzeuginneren aufhält und das Fahrzeug starten möchte. Bei Berechtigung des Codegebers wird dann die Wegfahrsperre gelöst und das Kraftfahrzeug kann gestartet werden.

Potentielle Autodiebe könnten die drahtlos übertragenen Signale zwischen Fahrzeug und Codegeber abhören und widerrechtlich wiedergeben, um unberechtigten Zugang zu dem Kraftfahrzeug zu erhalten oder um das Kraftfahrzeug unberechtigt zu benutzen.

Daher wird bei einem weiteren bekannten Diebstahlschutzsystem (US 4,595,902) neben dem Codegeber noch ein zweiter Sender mit unterschiedlicher Strahlungscharakteristik verwendet, dessen Codesignal jedoch nicht von einem Empfänger im Kraftfahrzeug empfangen werden soll. Das elektromagnetische Feld des zweiten Senders dient lediglich dazu, das elektromagnetische Feld des Codegebers außerhalb des Kraftfahrzeugs zu überlagern, so dass die eigentliche Codeinformation durch Abhören dem Feld außerhalb des Kraftfahrzeugs nicht entnommen werden kann, da sie nicht gesondert vorliegt.

Bei einem anderen Diebstahlschutzsystem (EP 0 983 916 A1) wird im Codegeber oder im Kraftfahrzeug die Laufzeit der ausgesendeten Signale gemessen und nur dann ver- oder entriegelt, wenn die Laufzeit innerhalb eines vorgegebenen Wertebereichs liegt. Die ansteigenden oder abfallenden Flanken der Signale müssen dabei sauber erkennbar sein, damit eine sichere Laufzeitmessung möglich ist. Bei überlagerten Signalen ist dies nicht mehr möglich.

Bei einem weiteren Diebstahlschutzsystem (EP 0 848 123 A2) wird bei Tastenbetätigung des Codegebers ein Startsignal im Hochfrequenz-Bereich zum Kraftfahrzeug gesendet, woraufhin der Frage-Antwort-Dialog ausgelöst wird. Sende- und Empfangseinheit im Kraftfahrzeug und Codegeber senden im gleichen Frequenzbereiche. Eine Überlappung der Signale findet nicht statt, da die dortigen Signale ansonsten nicht einwandfrei und getrennt voneinander demoduliert werden könnten. Ein Abhören und widerrechtliches Wiedergeben der Signale ist somit einfach möglich. Das Diebstahlschutzsystem ist daher leicht umgehbar.

Daher ist es Aufgabe der Erfindung, ein verbessertes Diebstahlschutzsystem zu schaffen, bei dem ein Abhören der übertragenen Signale erschwert wird.

Diese Aufgabe wird erfindungsgemäß durch ein Verfahren zum Betreiben eines Diebstahlschutzsystems mit den Merkmalen von Patentanspruch 1 und durch ein Diebstahlschutzsystem mit den Merkmalen von Patentanspruch 6 gelöst. Dabei findet der Dialog zwischen Kraftfahrzeug und Codegeber bei gleicher Trägerfrequenz statt. Zudem senden zu bestimmten Zeiten (Überlappung von Sendephasen) sowohl die fahrzeugseitige Sende- und Empfangseinheit als auch der Codegeber. Dadurch überlagern sich in diesen Zeitdauern die ausgesendeten Signale. Derjenige, der die Signale widerrechtlich abhören möchte, erkennt somit nicht, von welcher Einheit die Signale gesendet wurden, kann sie daher weder zuordnen noch die darin enthaltene Codeinformation auswerten.

Vorteilhafte Ausgestaltungen der Erfindung sind in den Unteransprüchen gekennzeichnet.

Ausführungsbeispiele der Erfindung werden im folgenden anhand der schematischen Zeichnungen näher erläutert. Es zeigen:
- Figur 1: ein Kraftfahrzeug mit einem erfindungsgemäßen Diebstahlschutzsystem,
- Figuren 2, 3 und 4: Impulsdiagramme von Signalen, die bei dem Diebstahlschutzsystem zwischen Fahrzeug und Codegeber übertragen werden und
- Figur 5: den Aufbau eines binären Antwortcodesignals.

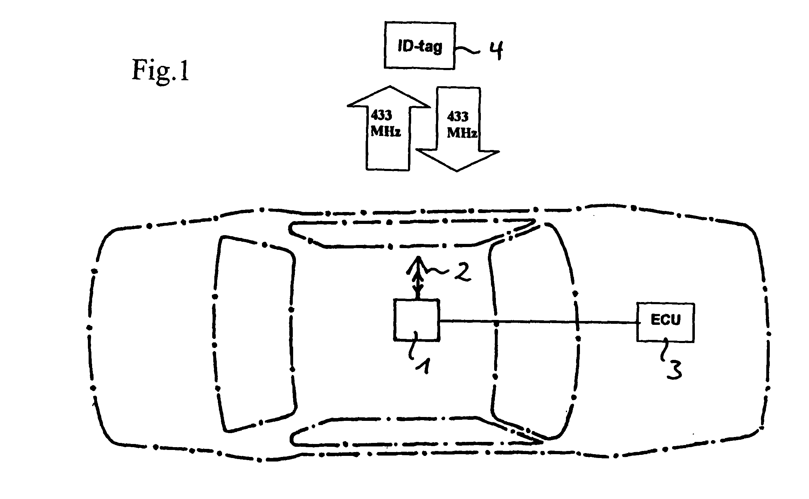

Ein Diebstahlschutzsystem für ein Kraftfahrzeug weist eine fahrzeugseitige Sende- und Empfangseinheit 1 (Figur 1) auf, die über eine Antenne 2 Signale aussendet und welche empfangen kann. Die Sende- und Empfangseinheit 1 wird von einem Steuergerät 3 (hier als ECU bezeichnet) zum Senden oder Empfangen und zum Modulieren oder Demodulieren von Signalen gesteuert. Das Auswerten der empfangenen Signale geschieht vorzugsweise in dem Steuergerät 3.

Außerdem weist das Diebstahlschutzsystem einen tragbaren Codegeber 4 (in der Figur als ID-tag bezeichnet) auf. Der Codegeber 4 enthält eine benutzerspezifische Codeinformation, mit der der Codegeber 4 seine Berechtigung zum Ver- oder Entriegeln des Kraftfahrzeugs oder zum Lösen der Wegfahrsperre nachweisen kann.

Wenn ein Benutzer ein Auslösemittel (Türgriff oder Schalter am oder in der Nähe des Türgriffs) am Kraftfahrzeug manuell betätigt, so wird ein Anforderungssignal in die Umgebung des Kraftfahrzeugs ausgesendet. Falls ein Codegeber 4 das Anforderungssignal empfängt, so sendet er seinerseits ein Antwortcodesignal automatisch zurück, das die Codeinformation enthält. Falls die Sende- und Empfangseinheit 1 das Antwortcodesignal empfängt, so wird die Codeinformation durch Demodulieren und Decodieren daraus extrahiert und mit einer erwarteten Sollcodeinformation in dem Steuergerät 3 verglichen. Bei Übereinstimmung wird ein Freigabesignal erzeugt, durch das ein Sicherheitsaggregat im Kraftfahrzeug, wie eine oder mehrere Türschlösser und/oder die Wegfahrsperre, ver- oder entriegelt.

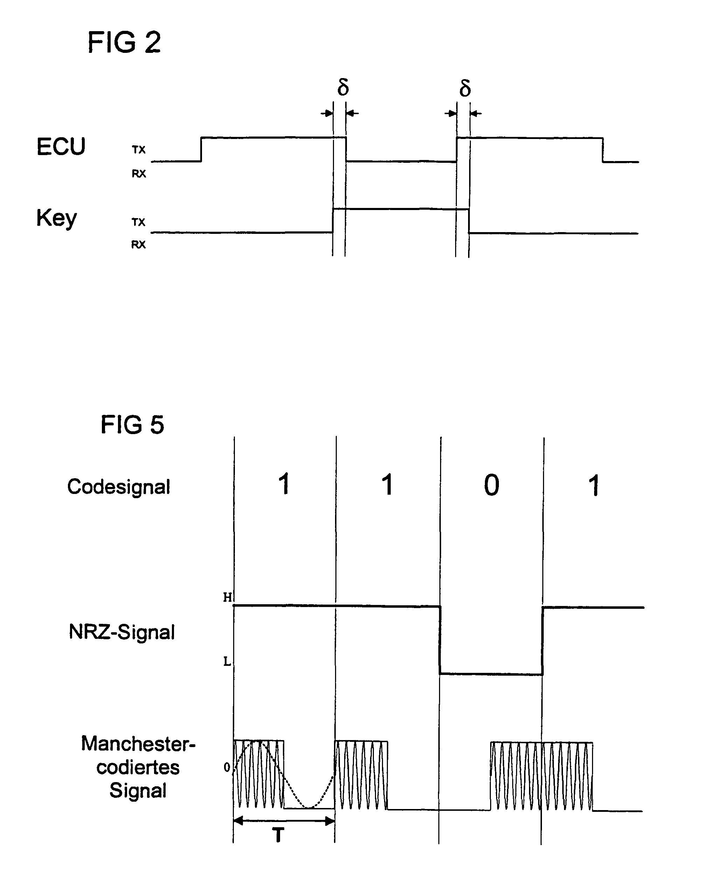

Damit das unberechtigte Abhören des Frage-Antwort-Dialogs zwischen Kraftfahrzeug und Codegeber 4 erschwert wird, werden die von dem Codegeber 4 und von der Sende- und Empfangseinheit 1 auszusendenden Informationen mit der gleichen Trägerfrequenz moduliert (hier beispielsweise 433 MHz). Außerdem werden - wie in Figur 2 schematisch und beispielhaft dargestellt - die Signale zeitlich so ausgesendet, dass sich die Signale der Sende- und Empfangseinheit 1 und die Signale des Codegebers 4 zeitlich überlappen.

In der Figur 2 ist das Sendesignal der Sende- und Empfangseinheit 1 oben und das Sendesignal des Codegebers 4 (hier als Key bezeichnet) unten dargestellt. Der zeitliche Überlappungsbereich ist dabei mit δ bezeichnet.

Die Signale müssen nicht an einem Stück übertragen werden, sondern können auch in mehrere Impulszüge aufgeteilt sein. Dabei sendet dann die jeweils andere Einheit, wenn die erste Einheit Pause macht und umgekehrt. Am Anfang und/oder am Ende eines Impulszuges kann eine Überlappung der Signale vorliegen, d.h. innerhalb dieser kurzen Zeitdauern (Überlappungsbereich δ) senden sowohl die Sende- und Empfangseinheit 1 als auch der Codegeber 4. Dadurch überlagern sich die Signale zu diesen Zeiten. Die zu diesen Zeiten übertragenen Daten können an einem weiter entfernten Standort durch die Überlagerung derart miteinander vermischt sein, dass sie nicht klar und eindeutig zuordenbar empfangen werden können.

Für die Erfindung ist es wichtig, dass zumindest ein Überlappungsbereich δ während des gesamten Frage-Antwort-Dialogs vorhanden ist. Es kann aber auch an jeder Flanke eines Impulszuges ein Überlappungsbereich δ vorhanden sein. Es können auch am Anfang (Anstiegsflanke) und am Ende (Abstiegsflanke) eines Impulszuges unterschiedlich lange Überlappungsbereiche δ₁ und δ₂ vorhanden sein.

Damit die relevanten Daten sicher empfangen werden, befinden sich am Anfang oder am Ende eines Impulszuges keine relevanten Daten, sondern nur redundante Daten (Scheindaten). Da zu Beginn eines Impulszuges oder an dessen Ende ohnehin Einschwing- bzw. Abklingvorgänge stattfinden, verlängern die Überlappungsbereiche δ die Zeitdauer für den kompletten Frage-Antwort-Dialog nur unwesentlich. Die eigentliche, durch die Signale zu übertragende Information steckt also nicht in einem Überlappungsbereich δ, sondern direkt benachbart.

Damit die korrekten Informationen auch den Signalen entnommen werden können, müssen die zeitliche Länge der Überlappungsbereiche δ sowohl dem Codegeber 4 als auch dem Steuergerät 3 bekannt sein. Nur dann können diese Einheiten die Informationen entsprechend aus den Signalen extrahiert und mit erwarteten Daten oder Informationen vergleichen.

Die Überlappungsbereiche δ sind für jedes Kraftfahrzeug und jeden Codegeber 4 unterschiedlich. Diese werden beispielsweise am Bandende bei der Herstellung des Kraftfahrzeugs während einer Initialisierung des Diebstahlschutzsystems eingestellt. Um die Informationen aus den Signalen zu extrahieren, müsste ein Unberechtigter die Überlappungsbereiche δ kennen oder beim Abhören die richtigen Überlappungsbereiche δ zufälligerweise einstellen. Denn ein Unberechtigter weiß nicht, ob die gerade abgehörten Signale von der Sende- und Empfangseinheit 1 im Kraftfahrzeug oder vom Codegeber 4 stammen. Außerdem weiß er nicht, ob die entsprechende Information redundant ist oder nicht. Zudem sind die Daten im Überlappungsbereich δ ein Ergebnis einer Signalüberlagerung und daher gegenüber den O-riginaldaten verfälscht. Ein Abhören und unberechtigtes Wiedergeben werden auf diese Weise sehr erschwert.

In den Überlappungsbereichen δ werden nur zufällig erzeugte, für das Diebstahlschutzsystem redundante Daten gesendet. Diese Überlappungsbereiche δ sollte so kurz wie möglich sein, damit der gesamte Frage- und Antwort-Dialog schnell vonstatten gehen kann. Wie weiter unten noch näher erläutert, genügt es, wenn sich die Signale gerade noch überlappen oder etwa zeitgleich enden/beginnen.

Da ein Unberechtigter, der die Signale abhören möchte, abwarten muss, bis ein Sender sicher das Senden beendet hat, benötigt der Unberechtigte eine Pause zwischen den Signalen. Die wird ihm jedoch durch das erfindungsgemäße Diebstahlschutzsystem nicht eingeräumt, da das nächste Signal bei Ende des ersten Signals bereits begonnen wird zu senden. Daher ist unter dem Ende eines ersten Signals und dem zeitgleichen Anfang eines zweiten Signals ebenfalls eine Überlappung zu verstehen.

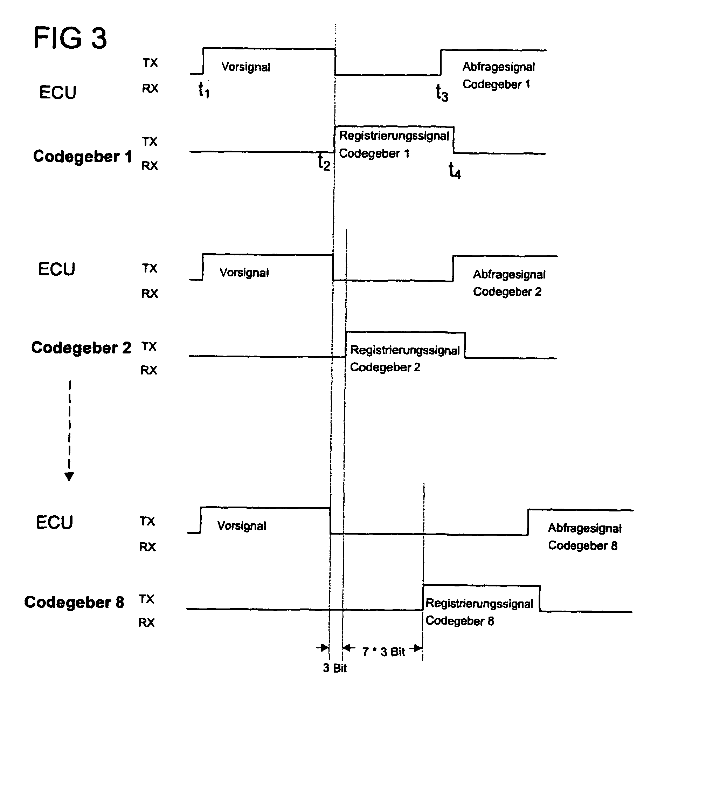

Bei dem Diebstahlschutzsystem können dem Kraftfahrzeug mehrere Codegeber 4 zugeordnet sein. In der Figur 3 sind dem Kraftfahrzeug acht Codegeber 4 zugeordnet. Jedem Codegeber 4 ist dabei eine Rangfolge (Priorität) zugeordnet, mit der er auf eine Anfrage vom Kraftfahrzeug antworten kann. Je nach Rangfolge wird das Senden zeitlich verzögert.

Zunächst sendet die Sende- und Empfangseinheit 1 während der Zeitdauer t₁ bis t₂ ein Vorsignal aus, mit dem sie beispielsweise erfahren möchte, welche Codegeber 4 in der Umgebung des Kraftfahrzeugs vorhanden sind.

Falls der erste Codegeber 4 mit höchster Rangstufe vorhanden ist, so beginnt er unverzüglich zum Zeitpunkt t₂ mit seinem Registrierungssignal, durch das er sich als anwesend registrierten lässt.

Sobald das Steuergerät 3 erkannt hat, dass ein Codegeber 4 vorhanden ist (wenn bereits die ersten Bits des Antwortcodesignals als zu dem Diebstahlschutzsystem zugehörig erkannt werden), beginnt es beim Zeitpunkt t₃ mit dem Senden des Abfragesignals, wodurch der Codegeber 4 veranlasst wird, seine Codeinformation zurückzusenden. Da der Codegeber 4 sein Antwortcodesignal bis zum Zeitpunkt t₄ sendet, überlappen sich die Signale im Überlappungsbereich δ = t₄-t₃.

Das gleiche Verfahren findet mit den weiteren Codegebern statt, die in der Nähe des Kraftfahrzeugs angeordnet sind und das Vorsignal empfangen. Allerdings beginnen diese Codegeber 4 erst nach einer Zeit, die abhängig ist von ihrer Rangfolge, das Antwortcodesignal zu senden. Bei dem vorliegenden Ausführungsbeispiel entspricht die Zeitverzögerung - bedingt durch die jeweilige Rangfolge des Codegebers 4 - einer Zeitdauer, in der drei Bit des Signals übertragen würden. So sendet beispielsweise der achte Codegeber 8*3 Bit nach Ende des Vorsignals.

Auf diese Weise ist sichergestellt, dass niederrangige Codegeber 4 die höherrangigen "hören", falls sie ihre Signale bereits begonnen haben auszusenden. Die niederrangigen Codegeber 4 fangen dann erst gar nicht mit dem Senden des Antwortcodesignals an. Infolgedessen ist eine eindeutige Zuordnung zu Schlüssel- und Codeinformation möglich, damit jeder Benutzer entsprechend seiner Rangfolge des Codegebers 4 Zugang zu dem Kraftfahrzeug findet.

Mit der vom Codegeber 4 übertragenen Codeinformation können auch benutzerindividuelle Informationen zum Kraftfahrzeug übertragen werden, um dem Kraftfahrzeug mitzuteilen, welcher Benutzer das Kraftfahrzeug benutzen wird. Daraufhin können benutzerindividuelle Einstellungen im Kraftfahrzeug, wie Verstellen der Sitze, der Spiegel, der Klimaanlage, der Motorsteuerung usw. vorgenommen werden.

Die einzelnen Impulszüge der jeweiligen Signale müssen nicht einheitliche Zeitdauer haben, sie können auch bei jedem Aussenden eine andere Zeitdauer aufweisen. Die Zeitdauern können beispielsweise durch Zufallsgeneratoren in Sende- und Empfangseinheit 1 und/oder Codegeber 4 erzeugt werden. Damit eine korrekte Erkennung der übertragenen Codeinformation möglich ist, wird die jeweilige Zeitdauer der jeweils empfangenden Einheit codiert mitgeteilt.

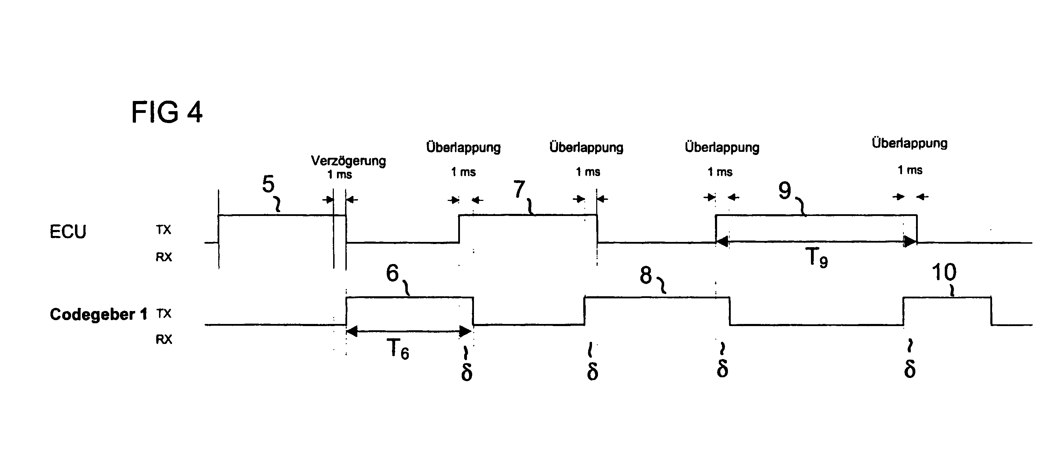

In der Figur 4 ist ein kompletter Frage-Antwort-Dialog zwischen Kraftfahrzeug und Codegeber 4 beispielhaft dargestellt. Ein solcher Dialog findet bei einer Baudrate von beispielsweise 16kBit/s statt (in Bezug auf die übertragenen binären Daten). Folglich dauert dann die gesamte Kommunikation etwa 71 ms.

Zunächst sendet die Sende- und Empfangseinheit 1 ein erstes Anforderungssignal 5 (auch als Vorsignal oder Broadcast Random Signal bezeichnet) mit einer Zeitdauer entsprechend der Sendedauer für 90 Bit aus. Diese Anforderungssignal 5 könnte beispielsweise die Abfrage beinhalten, welche Codegeber 4 in der Umgebung anwesend sind.

Das Ende des Startsignals 5 ist um etwa 1 ms verzögert, so dass das Ende mit dem Anfang eines ersten Antwortcodesignals 6 des Codegebers 4 zusammenfällt (eine herkömmliche Pause zwischen Anforderungssignal 5 und erstem Antwortcodesignal 6 ist somit nicht vorhanden). Sobald der Codegeber 4 den Beginn des Anforderungssignals 5 erkennt, wartet er eine Zeitdauer, die der Zeitdauer von 90 Bit entspricht, bis er das Aussenden seines ersten Antwortcodesignals 6 beginnt. Er beginnt also das Senden des Antwortcodesignals 6 gleichzeitig mit dem Ende des Anforderungssignals 5. Mit dem ersten Antwortcodesignal 6 lässt sich der Codegeber 4 beispielsweise als anwesend registrieren (auch als Registrierungssignal oder Registering Key bezeichnet).

Das erste Antwortcodesignal 6 steht etwa 30 Bit lang an. Da die Sende- und Empfangseinheit 1 die Länge des ersten Antwortcodesignals 6 kennt, fängt sie ihrerseits mit dem Senden des zweiten Anforderungssignals 7 bereits einige Bit früher an als das erste Antwortcodesignal 6 beendet ist. Es gibt sich somit ein Überlappungsbereich δ, hier beispielsweise von einer Millisekunde.

Nach einer festen Zeitdauer, die bezogen ist auf den Anfang des ersten Anforderungssignals 5 und abhängig ist von Überlappungsbereichen, Impulspausen und von Impulszugdauern Tᵢ, beginnt die Sende- und Empfangseinheit 1 mit dem Senden des zweiten Anforderungssignal 7. Daraufhin sendet der Codegeber 4 sein zweites Antwortcodesignal 8 aus. Er beginnt dabei ebenfalls eine Millisekunde vor Ende des zweiten Anforderungssignals 7 mit dem Senden seines Antwortcodesignals 8. Es ergibt sich hier ebenfalls ein Überlappungsbereich δ von einer Millisekunde. Mit dem zweiten Antwortcodesignal 8 wird beispielsweise der Code des erfassten Codegebers 4 abgefragt zum Nachweis einer Berechtigung.

Als Einleitung zum Beenden des Frage-Antwort-Dialogs sendet die Sende- und Empfangseinheit 1 ein drittes Anforderungssignal 9 mit einer zufälligen Dauer seines Impulszuges aus. Die Dauer des Impulszuges ist beispielsweise durch einen Zufallsgenerator bestimmt und ändert sich daher bei jedem Aussenden.

Die Dauer ist als codierte Information in dem Anforderungssignal 9 enthalten und wird auf diese Weise dem Codegeber 4 mitgeteilt.

Der Codegeber 4 überprüft seinerseits die tatsächliche Länge oder den Zeitpunkt des Starts des Anforderungssignal 9 und bringt diese Daten in Relation zu dem übertragenen Wert für die Dauer. Daraufhin sendet er seinerseits ein drittes Antwortcodesignal 10 zurück, in dem er der Sende- und Empfangseinheit 1 bestätigt, dass die Impulszuglänge des Anforderungssignal 9 korrekt war. Das dritte Anforderungssignal 9 und dritte Antwortcodesignal 10 sind ebenfalls um etwa eine Millisekunde überlappend.

Durch den Empfang des ersten Anforderungssignals 5 wird der Codegeber 4 synchronisiert. Abgestellt wird dabei auf den Anfang des Anforderungssignals 5, und zwar auf die ansteigende Flanke. Darauf sind dann alle weiteren Anfangszeitpunkte der restlichen Signale 6 bis 10 abgestimmt. Signallaufzeiten zwischen Sende- und Empfangseinheit 1 und Codegeber 4 sind verglichen mit den Impulszugdauern Tᵢ vernachlässigbar gering und spielen daher eine untergeordnete Rolle.

In dem zweiten Antwortcodesignal 8 ist im wesentlichen die relevante Codeinformation enthalten. Diese Codeinformation muss mit einer Sollcodeinformation übereinstimmen, die in dem Steuergerät 3 erwartet wird und dort zum Vergleich gespeichert ist. Wenn auch noch das dritte Antwortcodesignal 10 die korrekte Länge der Impulszugdauer Tᵢ des Anforderungssignal 9 quittiert, so wird das Freigabesignal zum ver- oder entriegeln der Türen oder zum Lösen der Wegfahrsperre erzeugt.

In den Überlappungsbereichen δ ist nur redundante Information enthalten. Die Überlappungsbereiche δ sind vorteilhafterweise für jedes Diebstahlschutzsystem eines Kraftfahrzeugs unterschiedlich und werden nach außen hin nicht bekannt gegeben. Somit kennt kein Außenstehender die Länge der Überlappungsbereiche δ und auch nicht diejenigen Bereiche innerhalb der Signale, in denen codierte Information enthalten ist. Ein Unberechtigter, der den Frage-Antwort-Dialog abhört, weiß somit nicht, wo er mit dem decodieren der Signale beginnen soll und wo er enden soll.

Das erste Antwortcodesignal 6 des Codegebers 4 kann ebenfalls bereits einen Teil der Codeinformation enthalten. Die Codeinformation kann also in viele Etappen auf mehrere Impulszüge aufgeteilt gesendet werden. Bei einer einfachen Ausführungsbeispiel genügt ein einziger Impulszug als Antwortcodesignal.

Die übertragenen Signale, wie das Anforderungssignal oder das Antwortcodesignal, sind codierte Signale, die jeweils eine codierte oder verschlüsselte Information/Daten aufweisen. Die zu übertragenden Daten sind binär codiert oder verschlüsselt und weisen viele Bitstellen auf. Je mehr Bitstellen in den Signalen vorhanden sind, desto höher ist die Sicherheit des Diebstahlschutzsystems.

In der Figur 5 ist ein Teil einer binären Codeinformation mit den logischen Werten 0 und 1 der einzelnen Bits dargestellt. Diese Codeinformation kann durch ein NRZ-Signal (Non Return to Zero) mit den logischen Zuständen H und L für jedes Bit dargestellt werden. Ein solches Signal kann beispielsweise im Manchestercode (codiertes Format) dargestellt werden. Beim Manchester-Code wird eine Trägerschwingung (die mit der Trägerfrequenz schwingt) innerhalb eines Bits (d.h. innerhalb der Impulsdauer T eines einzigen Bits) einmal voll (oder auch nur teilweise, d.h. mit reduzierter Amplitude) und einmal gar nicht bezüglich der Amplitude ausgetastet (auch als ON-OFF-Keying bezeichnet). Ein Signal mit dem logischen Wert 1 wird durch einen Impuls der Länge T/2 in der ersten Hälfte der Impulsdauer T erzeugt, während ein Signal mit dem Wert 0 durch einen Impuls der Länge T/2 in der zweiten Hälfte erzeugt wird. Die real erhaltene Hüllkurve (ideal wäre es eine Rechteckeschwingung) ist durch eine punktierte Linie in Sinusform dargestellt.

Bei diesem Manchester-Code handelt es sich um ein sogenanntes Biphasenformat, das vorteilhaft bei drahtlosen Übertragung von Signalen in der Automobiltechnik verwendet wird.

Durch Verwenden des Manchestercodes muss derjenige, der unberechtigt die Signale abhören möchte, zumindest ein Bit nach Beendigung eines Signals abwarten, um sicher zu entscheiden, ob noch weitere Bits folgen oder nicht. Erst dann kann er eine Zuordnung treffen, wer das entsprechende Signal gesendet hat und das jeweilige Signal auswertet.

Es genügt bereits für die Erfindung, wenn abfallende Flanke des ersten Signals und ansteigende Flanke des zweiten Signals etwa zeitgleich sind. Dies bedeutet beim Manchester-Code bereits eine Überlappung. Vorteilhafterweise werden die Signale um einen größeren Überlappungsbereich δ überlappend gesendet. Unberechtigten fällt es daher sehr schwer, die einzelnen Signale sicher zu erkennen. Da zudem die Dauern Tᵢ der Impulszüge von Zeit zu Zeit ändern können, wird die Abhörmöglichkeit und die Auswertung der Signale weiterhin erschwert.

Da die Signale mit der gleichen Trägerfrequenz moduliert sind, können auch keine zwei verschiedenen Empfänger verwendet werden, um die verschiedenen Signale zu selektieren. Vorteilhafterweise werden Trägerfrequenzen von 315 MHz, 433 MHz oder 868 MHz verwendet. Es können auch höhere Frequenzen im GHz-Bereich verwendet werden. Voraussetzung ist jedoch, dass sowohl Sende- und Empfangseinheit 1 als auch Codegeber 4 mit der gleichen Trägerfrequenz die zu übertragenden Informationen modulieren.

Je höher die Frequenz (und damit auch die Baudrate; zur Zeit bis etwa 20kBit/s) ist, um so schneller kann der komplette Frage-Antwort-Dialog vonstatten gehen. Der Benutzer des Kraftfahrzeugs merkt somit nicht, dass aufwendiger, abhörsicherer Frage-Antwort-Dialog zwischen Kraftfahrzeug und Codegeber 4 stattfindet. Folglich kann der Benutzer ohne Komforteinbußen den Türgriff ziehen oder den Auslöseschalter betätigen, um Zugang zum Kraftfahrzeug zu erhalten. Voraussetzung ist allerdings, dass er seinen berechtigten Codegeber 4 bei sich trägt.

Die Sende- und Empfangseinheit 1 und das Steuergerät 3 können in einem gemeinsamen Gehäuse untergebracht sein. Die Sende- und Empfangseinheit 1 kann eine einzige Sende- und Empfangsantenne 2 aufweisen. Es können auch voneinander getrennte Sende- und Empfangsantennen im Kraftfahrzeug angeordnet sein. Die Antennen 2 sind so angeordnet, dass mit einem Sendesignal möglichst alle Bereiche im und in der Umgebung des Kraftfahrzeug bestrahlt werden.

Unter dem Begriff "Codegeber " ist - unabhängig von seiner äußeren Form - eine Vorrichtung zu verstehen, die ein Signal empfängt und daraufhin ein codiertes Signal zurücksendet. Der Codegeber kann dabei auf einer Chipkarte/Scheckkarte oder in einem Schlüsselgriff angeordnet sein. Mit dem Codegeber kann ein Schließsystem eines Kraftfahrzeugs und eine Wegfahrsperre ohne Zuhilfenahme eines mechanischen Schlüssels fernbedient werden.

Unter dem Frage-Antwort-Dialog ist eine bidirektionale Kommunikation zwischen der Sende- und Empfangseinheit 1 und dem Codegeber 4 zu verstehen, bei der ein erstes Signal als Aufforderung zum Antworten ausgesendet wird. Der Codegeber 4 antwortet darauf automatisch, falls er das erste Signal empfängt.

## Patentansprüche

1. Verfahren zum Betreiben eines Diebstahlschutzsystems für ein Kraftfahrzeug, wobei das Diebstahlschutzsystem aufweist:
- eine Sende- und Empfangseinheit (1) im Kraftfahrzeug, die bei Auslösung ein Anforderungssignal (5, 7, 9) aussendet, ein empfangenes Antwortcodesignal (6, 8, 10) mit einem Sollcodesignal vergleicht und bei zumindest weitgehender Übereinstimmung ein Freigabesignal an ein Sicherheitsaggregat sendet, und
- einem tragbaren Codegeber (4), der nach Empfang eines Anforderungssignals (5, 7, 9) ein Antwortcodesignal (6, 8, 10) aussendet, wodurch eine Berechtigung des Codegebers (4) nachgewiesen wird,
**gekennzeichnet durch** folgende Schritte:
- dass sowohl die Sende- und Empfangseinheit (1) als auch der Codegeber (4) ihre Signale bei gleicher Trägerfrequenz moduliert aussenden, und
- dass sich Sendedauern des Anforderungssignals und des Antwortcodesignals zeitlich überlappen.

2. Verfahren nach Anspruch 1, **dadurch gekennzeichnet, dass** die Sende- und Empfangseinheit (1) ein Anforderungssignal aussendet, dessen Dauer variabel ist.

3. Verfahren nach einem der vorhergehenden Ansprüche, **dadurch gekennzeichnet, dass** die Signale mit einer Trägerfrequenz von etwa 315 MHz, von etwa 433 MHz oder von etwa 868 MHz übertragen werden.

4. Verfahren nach einem der vorhergehenden Ansprüche, **dadurch gekennzeichnet, dass** der Codegeber (4) sein Antwortcodesignal eine festgelegte Zeitdauer nach Anfang des Anforderungssignals aussendet.

5. Verfahren nach einem der vorhergehenden Ansprüche, **dadurch gekennzeichnet, dass** vor dem Anforderungssignal (7) ein Startsignal (5) von der Sende- und Empfangseinheit (1) ausgesendet wird, woraufhin der Codegeber (4) mit einem Antwortsignal (6) antwortet und dass das Senden des Anforderungssignals spätestens mit dem Ende des Antwortsignals gestartet wird.

6. Diebstahlschutzsystem für ein Kraftfahrzeug
- mit einer Sende- und Empfangseinheit (1) im Kraftfahrzeug, die bei Auslösung ein Anforderungssignal (5, 6, 7) aussendet, daraufhin ein Antwortcodesignal (6, 8, 10) erwartet und eine in dem empfangenen Antwortcodesignal enthaltene Codeinformation mit einer vorgegebenen Sollcodeinformation vergleicht sowie bei zumindest weitgehender Übereinstimmung der beiden Informationen ein Freigabesignal an ein Sicherheitsaggregat sendet, und
- einem tragbaren Codegeber (4), der nach Empfang eines Anforderungssignals (5, 6, 7) ein Antwortcodesignal (6, 8, 10) aussendet, das eine für den Codegeber (4) charakteristische Codeinformation aufweist,
**dadurch gekennzeichnet, dass**
- die von dem Codegeber (4) und von der Sende- und Empfangseinheit (1) auszusendenden Informationen mit der gleichen Trägerfrequenz moduliert werden, wobei
- die Sende- und Empfangseinheit (1) einen Signalgenerator aufweist, der das Anforderungssignal derart zeitlich steuert, dass es sich mit dem Antwortcodesignal zumindest teilweise zeitlich überlappt.

## Claims

1. Method for operating an anti-theft system for a motor vehicle, the anti-theft system having:
- a transceiver unit (1) in the motor vehicle which, when triggered, emits a request signal (5, 7, 9), compares a received response signal (6, 8, 10) with a reference code signal, and, when they at least largely correspond, transmits an enable signal to a security assembly, and
- a portable code generator (4) which, after reception of a request signal (5, 7, 9), emits a response code signal (6, 8, 10), as a result of which authorization of the code generator (4) is confirmed,
**characterized by** the following steps:
- that both the transceiver unit (1) and the code generator (4) emit their signals modulated at the same carrier frequency, and
- that transmission periods of the request signal and of the response signal overlap chronologically.

2. Method according to Claim 1, **characterized in that** the transceiver unit (1) emits a request signal whose duration is variable.

3. Method according to one of the preceding claims, **characterized in that** the signals are transmitted with a carrier frequency of approximately 315 MHz, of approximately 433 MHz or of approximately 868 MHz.

4. Method according to one of the preceding claims, **characterized in that** the code generator (4) emits its response code signal a fixed time period after the start of the request signal.

5. Method according to one of the preceding claims, **characterized in that**, before the request signal (7), a start signal (5) is emitted by the transceiver unit (1), in response to which the code generator (4) responds with a response signal (6), and **in that** the transmission of the request signal starts at the latest at the end of the response signal.

6. Anti-theft system for a motor vehicle
- having a transceiver unit (1) in the motor vehicle, which, when triggered, emits a request signal (5, 6, 7), then waits for a response code signal (6, 8, 10) and compares the code information item contained in the received response code signal with a predefined reference code information item, and when the two information items at least largely correspond, transmits an enable signal to a security assembly, and
- a portable code generator (4) which, after reception of a request signal (5, 6, 7), emits a response code signal (6, 8, 10) which has a code information item which is characteristic of the code generator (4),
**characterized in that**
- the information which is to be emitted by the code generator (4) and by the transceiver unit (1) is modulated with the same carrier frequency,
- the transceiver unit (1) having a signal generator which controls the request signal chronologically in such a way that it at least partially overlaps chronologically with the response code signal.

## Revendications

1. Procédé d'utilisation d'un système antivol pour un véhicule automobile, dans lequel le système antivol comporte :
- une unité d'émission et de réception (1) dans le véhicule automobile, qui émet au moment de l'activation un signal d'interrogation (5, 7, 9), compare un signal codé de réponse reçu (6, 8, 10) à un signal codé de consigne et, en cas de coïncidence au moins grande, émet un signal de déblocage vers un groupe de sécurité, et
- un émetteur de code (4) portable qui, à la suite de la réception d'un signal d'interrogation (5, 7, 9) émet un signal codé de réponse (6, 8, 10), après quoi une autorisation de l'émetteur de code (4) est attestée,
**caractérisé par** les étapes suivantes :
- l'unité d'émission et de réception (1), de même que l'émetteur de code (4) émettent leurs signaux modulés à la même fréquence porteuse, et
- les durées d'émission du signal d'interrogation et du signal codé de réponse se chevauchent temporairement.

2. Procédé selon la revendication 1, **caractérisé en ce que** l'unité d'émission et de réception (1) émet un signal d'interrogation dont la durée est variable.

3. Procédé selon l'une quelconque des revendications précédentes, **caractérisé en ce que** les signaux sont transmis avec une fréquence porteuse de 315 MHz environ, 433 MHz environ ou 868 MHz environ.

4. Procédé selon l'une quelconque des revendications précédentes, **caractérisé en ce que** l'émetteur de code (4) émet son signal codé de réponse à un intervalle de temps défini après le début du signal d'interrogation.

5. Procédé selon l'une quelconque des revendications précédentes, **caractérisé en ce que** l'unité d'émission et de réception (1) émet, avant le signal d'interrogation (7), un signal de départ (5), à la suite duquel l'émetteur de code (4) répond par un signal de réponse (6) et **en ce que** l'émission du signal d'interrogation commence au plus tard à la fin du signal de réponse.

6. Système antivol pour un véhicule automobile
- comportant une unité d'émission et de réception (1) dans le véhicule automobile, qui émet au moment de l'activation un signal d'interrogation (5, 7, 9), à la suite de cela attend un signal codé de réponse (6, 8, 10) et compare une information codée contenue dans le signal codé de réponse à un signal codé de consigne prédéfini et, en cas de coïncidence au moins grande entre les deux informations, émet un signal de déblocage vers un groupe de sécurité, et
- un émetteur de code (4) portable qui, à la suite de la réception d'un signal d'interrogation (5, 7, 9) émet un signal codé de réponse (6, 8, 10), qui contient une information codée caractéristique pour l'émetteur de code (4),
**caractérisé en ce que**
- les informations émises par l'émetteur de code (4) et l'unité d'émission et de réception (1) sont modulées avec la même fréquence porteuse,
- l'unité d'émission et de réception (1) comportant un générateur de signaux qui commande le signal d'interrogation en fonction du temps, de telle sorte que le signal d'interrogation et le signal codé de réponse se chevauchent temporairement au moins partiellement.
